# FASCICULE DE BREVET EUROPEEN

(11) **EP 3 554 911 B1**
(45) Date de publication et mention de la délivrance du brevet: **13.04.2022**
(21) Numéro de dépôt: 17825565.9
(22) Date de dépôt: 11.12.2017
(51) Int. Cl.: B60W 50/14

(54) **DISPOSITIF D'ASSISTANCE D'UN CONDUCTEUR D'UN VÉHICULE POUR EFFECTUER DES EXERCICES PHYSIQUES**
VORRICHTUNG ZUR UNTERSTÜTZUNG EINES FAHRERS EINES FAHRZEUGS ZUR DURCHFÜHRUNG VON KÖRPERÜBUNGEN
DEVICE FOR ASSISTING A DRIVER OF A VEHICLE TO PERFORM PHYSICAL EXERCISES

(30) Priorité: 15.12.2016 FR 1662563
(43) Date de publication de la demande: 23.10.2019
(73) Titulaire: PSA Automobiles SA, 78300 Poissy (FR)
(72) Inventeur: CREHAN, Gabriel, 92420 Vaucresson (FR); SCHNEIDER, Stephanie, 92150 Suresnes (FR); CHERIOT, Thierry, 91340 Ollainville (FR); DIAZ, Emmanuelle, 78730 Saint Arnoult en Yvelines (FR)
(74) Mandataire: Jeannin, Laurent Jean-Pierre
(86) Numéro de dépôt international: PCT/FR2017/053493
(87) Numéro de publication internationale: WO 2018/109344

(56) Documents cités:
- DE-A1-102013 222 048
- DE-A1-102015 011 048
- DE-A1-102015 105 581
- DE-A1-102015 201 369
- DE-B3- 10 249 415

## Description

L'invention concerne les dispositifs d'assistance au conducteur, et plus particulièrement, les dispositifs permettant d'effectuer des exercices physiques.

On connaît des applications de coaching proposant à un utilisateur d'effectuer des exercices physiques tels que la course à pieds ou le yoga. Ces activités peuvent être pratiquées dans différents lieux : à la maison, au bureau, dans une salle de gymnastique ou dans un parc. De telles applications s'exécutent généralement sur des dispositifs nomades tels que des téléphones intelligents (ou smartphone en anglais) ou des tablettes numériques.

On connaît, par exemple, par le document US20100015585 un procédé et un dispositif pour fournir un soutien didactique audiovisuel personnalisé pour aider une personne à effectuer des positions ou des mouvements.

Cependant, ces dispositifs ne sont pas prévus pour être utilisés dans un véhicule, à l'arrêt ou en mouvement. En particulier, un conducteur d'un véhicule en mouvement ne peut pas utiliser de tels dispositifs de façon sécurisée.

En situation de conduite, certaines commandes (la boite de vitesse, le volant, les pédales de frein et d'accélération, ...) doivent être précisément manipulées par le conducteur. Cela peut s'avérer particulièrement compliqué si les exercices proposés sont trop compliqués ou s'ils occasionnent une charge cognitive trop importante.

On connait par le document DE10249415 un véhicule à moteur comprenant un dispositif d'assistance pour aider au diagnostic, à la thérapie et / ou au traitement prophylactique d'une personne qui se trouve dans le véhicule. Un dispositif électronique de traitement de données sert à actionner et / ou à interroger automatiquement le dispositif d'assistance. Le dispositif d'assistance peut activer automatiquement au moins un dispositif destiné à inciter la personne à effectuer une action, par ex. prendre des médicaments ou effectuer un exercice physiologique. Il peut également y avoir un dispositif d'identification pour identifier la personne, afin et / ou d'interroger le dispositif d'assistance sur la base du résultat de l'identification de la personne.

On connait aussi par le document DE102013222048 un procédé et un appareil pour activer ou désactiver une fonction de conduite automatique d'un système technique pour assister le conducteur d'un véhicule à moteur, sur la base des états du pilote.

L'invention a donc pour but de proposer un dispositif d'aide pour effectuer des exercices physiques, adapté à une utilisation par un conducteur d'un véhicule.

Elle propose plus précisément à cet effet un dispositif d'assistance d'un conducteur d'un véhicule, pour effectuer des exercices physiques, comportant
- des moyens d'acquisition de données représentatives d'un contexte de conduite,
- des moyens de détermination d'un niveau de risque à partir des données acquises,
- des moyens de sélection d'au moins un exercice physique compatible avec le niveau de risque,
- des moyens d'émission d'un signal indiquant au conducteur le au moins un exercice sélectionné.

L'invention permet à un conducteur d'un véhicule d'effectuer des exercices physiques en toute sécurité. Le dispositif selon l'invention permet d'adapter les exercices proposés au conducteur en fonction d'un niveau de risque lié au contexte de conduite du véhicule.

Avec l'invention, il est possible d'utiliser le temps de trajet dans un véhicule pour une activité physique ou une activité de détente.

Avantageusement, les données représentatives d'un contexte de conduite comportent au moins une donnée choisie parmi, une vitesse du véhicule, une accélération et/ou une décélération du véhicule, un changement de direction du véhicule. Egalement, des zones routières présentant différents niveaux de danger. Ces zones (citées en ordres descendant de risque) sont par exemple : centre-ville, ville, banlieue, urbain, extra urbain, route départementale, route nationale et autoroute. Egalement, la proximité avec des carrefours présente un danger par le nombre des voitures qui peuvent surgir de votre droit ou gauche nécessitant une charge mentale très important de la part de conducteur. Trop de surcharge mental (ou distraction) nécessite une prise en compte dans les propositions des mouvements à réaliser et le niveau de risque routière.

Les données utilisées permettent par exemple de déterminer si le véhicule est en mouvement ou à l'arrêt et d'adapter les exercices proposées en conséquence.

Avantageusement, le dispositif d'assistance selon l'invention, comporte en outre une mémoire dans laquelle est stocké un ensemble de relations entre des niveaux de risques, d'une part, et des exercices physiques compatibles avec lesdits niveaux de risques, d'autre part.

Avantageusement, le véhicule comportant au moins un mode de conduite autonome, le dispositif d'assistance comporte en outre des moyens de détermination du mode de conduite activé dans le véhicule, ledit mode de conduite activé étant pris en compte pour la détermination d'un niveau de risque et/ou la sélection d'au moins un exercice physique.

Avantageusement, le dispositif d'assistance selon l'invention, comporte en outre des moyens d'acquisition de paramètres liés au conducteur.

Avantageusement, les données représentatives d'un contexte de conduite proviennent de capteurs du véhicule.

Selon une variante de l'invention, le dispositif d'assistance selon l'invention, comprend un module logiciel exécuté sur un calculateur embarqué du véhicule.

Selon une autre variante de l'invention, le dispositif d'assistance selon l'invention, comprend un module logiciel exécuté terminal mobile.

Avantageusement, le véhicule comportant au moins un mode de conduite autonome, le dispositif d'assistance selon l'invention comporte en outre des moyens de détermination du mode de conduite activé dans de véhicule.

L'invention concerne aussi un véhicule caractérisé en ce qu'il comporte un dispositif d'assistance selon l'invention.

D'autres caractéristiques et avantages de l'invention apparaîtront à l'examen de la description détaillée ci-après, et des dessins annexés, sur lesquels:
- la figure 1 illustre de façon schématique un dispositif selon l'invention ;
- la figure 2 illustre un premier mode de réalisation de l'invention ;
- la figure 3 illustre un deuxième mode de réalisation de l'invention ;
- la figure 4 illustre un troisième mode de réalisation de l'invention.

Les dessins annexés pourront non seulement servir à compléter l'invention, mais aussi contribuer à sa définition, le cas échéant.

Beaucoup de personnes souhaitent utiliser le temps passé dans un long trajet ou dans des embouteillages, pour améliorer leur santé ou prévenir certaines affections.

La santé, le stress, le surpoids, la fatigue, la vigilance ou les problèmes médicaux, tels le mal de dos, les tendinites, le relâchement du périnée (par exemple après une naissance ou en cas d'incontinence), sont des problèmes souvent ignorées ou ne trouvant pas solution adéquates.

L'invention permet d'améliorer cette situation en proposant un dispositif permettant une pratique sûre d'une activité physique dans un véhicule. Le but de l'invention est de permettre d'améliorer le bien-être et la santé des occupants (passagers et/ou conducteur) du véhicule.

Les exercices, proposés par le dispositif et sélectionnés en fonction de données telles que la vitesse ou la position du véhicule, permettent une pratique sans danger à l'intérieur du véhicule.

Le dispositif selon l'invention peut être mis en œuvre sous la forme d'une application logicielle exécutée sur un terminal mobile ou sur un calculateur du véhicule.

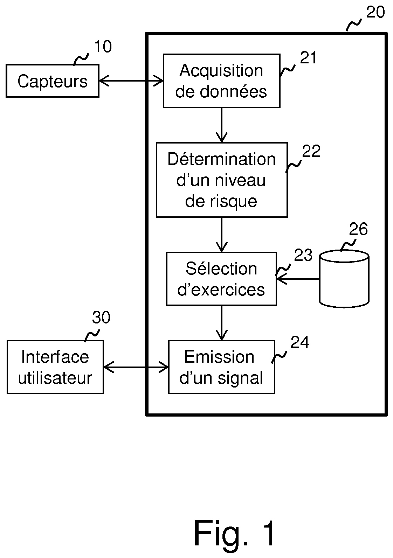

En référence à la figure 1, le dispositif d'assistance 20 selon l'invention comporte :
- des moyens 21 d'acquisition de données représentatives d'un contexte de conduite depuis au moins une source de données 10.
- des moyens 22 de détermination d'un niveau de risque à partir des données acquises,
- des moyens 23 de sélection d'au moins un exercice physique compatible avec le niveau de risque,
- des moyens 24 d'émission d'un signal indiquant à l'utilisateur le au moins un exercice sélectionné.

Les données représentatives d'un contexte de conduites sont par exemples : la vitesse du véhicule, l'accélération et/ou la décélération du véhicule, un changement de direction du véhicule, des données de géolocalisation du véhicule ou toutes autres données permettant de déterminer comment évolue le véhicule.

De façon avantageuse, les données représentatives d'un contexte de conduites comportent une zone routière dans laquelle circule le véhicule. Les zones routières présentent différents niveaux un danger. Ces zones (citées en ordres descendant de risque) sont par exemple : centre-ville, ville, banlieue, urbain, extra urbain, route départementale, route nationale et autoroute.

Dans le cas où le dispositif d'assistance 20 est intégré à un terminal mobile, la source de données 10 comporte par exemple: un module de géolocalisation dudit terminal mobile. Un tel module de géolocalisation comporte généralement un récepteur GPS (pour Global Positionning System), un accéléromètre, un gyroscope, et/ou une boussole.

De façon avantageuse, le dispositif d'assistance 20 est connecté à un calculateur du véhicule. Dans ce cas, le dispositif d'assistance 20 utilise des données directement issues du véhicule (par exemple, la vitesse, la position, l'accélération, ...).

Egalement, si la voiture est en mode « 100% autonome» ou en mode manuelle. En mode autonome, le conducteur aura le même niveau de risque qu'un passager. En conséquence les mêmes exercices. La reprise de la conduite de l'automobile rebascule le coach en mode conducteur avec les fonctionnalités et les exercices adaptés.

Cette caractéristique permet de disposer de données représentatives d'un contexte de conduite de hautes qualités. De la sorte, les exercices proposés sont adaptés avec encore plus de précision et le risque de pratiquer une activité dans le véhicule s'en trouve encore minimisé.

Selon un autre mode de réalisation de l'invention, le dispositif d'assistance 20 est connecté à un serveur distant et récupère des données qui ont été préalablement téléchargées depuis le véhicule ou depuis des objets connectés.

Les moyens 24 d'émission transmettent un signal, indiquant l'exercice à effectuer, à une interface utilisateur 30.

Dans le cas où le dispositif d'assistance 20 est intégré à un terminal mobile, l'interface utilisateur 30 comporte l'écran du terminal mobile ou au moins un haut-parleur de du terminal mobile.

Dans le cas où le dispositif d'assistance 20 est intégré à un calculateur du véhicule, l'interface utilisateur 30 comporte au moins écran intégré au véhicule et/ou au moins un haut-parleur du véhicule.

Les instructions concernant les exercices proposés sont délivrées sous la forme de sons, d'images ou de vidéos.

De façon avantageuse, le média utilisé pour indiquer les exercices dépend du niveau de risque déterminé.

On comprend que l'attention est plus soutenue lors de la consultation d'une vidéo que lors de celle d'une image. De même l'attention est plus soutenue lors de la consultation d'une image que lors de l'écoute d'une instruction.

Aussi les instructions sonores sont privilégiés lors des situations les plus dangereuses et les vidéos lors des situations les moins dangereuses.

Les moyens 22 de détermination d'un niveau de risque utilisent les données acquises pour estimer un niveau de risque.

Par exemple, plus la vitesse du véhicule est élevée plus le niveau de risque de pratiquer un exercice devient élevé. La relation entre le niveau de risque et la vitesse du véhicule peut être linéaire mais pas nécessairement. En outre, la relation peut dépendre de l'exercice pour lequel le niveau de risque est estimé.

Les moyens 22 de détermination d'un niveau de risque peuvent aussi utiliser des changements de direction du véhicule. Plus les changements de direction du véhicule sont élevés plus le niveau de risque de pratiquer un exercice devient élevé. La relation entre le niveau de risque et les changements de directions du véhicule 15 peut être linéaire mais pas nécessairement. En outre, la relation peut dépendre de l'exercice pour lequel le niveau de risque est estimé.

Les changements de direction du véhicule sont estimés par exemple par :
- un angle entre deux vecteurs de directions successifs du véhicule,
- un angle entre une position initiale et une position courante du volant.

Les moyens 22 de détermination d'un niveau de risque peuvent aussi utiliser une accélération ou une décélération du véhicule. Plus l'accélération ou la décélération du véhicule est élevée plus le niveau de risque de pratiquer un exercice devient élevé. La relation entre le niveau de risque et la vitesse du véhicule peut être linéaire mais pas nécessairement. En outre, la relation peut dépendre de l'exercice pour lequel le niveau de risque est estimé.

Le tableau suivant montre un exemple de relation entre des données acquises et des niveaux de risques. On distingue quatre niveaux de risques : faible, moyen, élevé et dangereux.

| Niveau de risque | Situation | | |
|---|---|---|---|
| | Vitesse du véhicule (km/h) | Accélération / Décélération (m/s²) | Changement de direction (Nombre de mètres tous les 50 mètres) |
| Faible | ≤ 10 | ≤ 2 | ≤ 2 |
| Moyen | 10-50 | 2- 6 | 2-5 |
| Elevé | 50 - 130 | 6-8 | ≥ 5 - 7 |
| Dangereux | >130 | >8 | >7 |

Selon une variante de l'invention, le niveau de risque est évalué indépendamment de la vitesse du véhicule, en utilisant par exemple la position du véhicule pour déterminer une situation de conduite telle : véhicule circulant en ville, sur autoroute, à un carrefour, à un feu tricolore, ....

Egalement, une autre variation de l'invention prend en compte les zones cartographiques qui incluent : centre-ville, ville, urbain, extra urbain, campagne etc...

| Niveau de risque | Situation | |
|---|---|---|
| Faible | Autoroute | Extra urbain |
| Moyen | Route national | Urbain |
| Elevé | Route Departementale | Ville |
| Dangereux | Carrefour | Centre ville |

A noter : dans cet exemple on ne place pas le niveau de risque en fonction de la vitesse (exemple précédent) mais en fonction de zones géographique ou type de route.

Chacune de ces situations de conduite est associée à un niveau de risque.

Le dispositif sélectionne ou adapte les exercices en fonction du niveau de risque déterminé.

Avantageusement, le dispositif d'assistance selon l'invention, comporte en outre une mémoire 26 dans laquelle est stocké un ensemble de relations entre des niveaux de risques, d'une part, et des exercices physiques compatibles avec lesdits niveaux de risques, d'autre part.

Lorsque la situation devient trop dangereuse (par exemple niveau de risque dangereux), l'application ne propose aucun exercice.

En outre, les exercices proposés sont adaptés selon que l'utilisateur est passager ou conducteur du véhicule.

Le tableau suivant montre un exemple d'exercice possible en fonction du niveau de risque estimé.

| Niveau de risque | Exercices appropriés en fonction du niveau de risque |
|---|---|
| Faible | Contraction des muscles abdominaux, |
| | Rotation des hanches par rapport au dos, |
| | Pousser les mains l'une vers l'autre pour contracter les muscles des bras et de la poitrine, |
| | Redresser le dos, maintenir la tête haute et repousser les épaules vers le bas pour établir et maintenir une bonne position assise. |
| Moyen | Pousser les genoux ensemble pour contracter les muscles et les tendons des jambes, |
| | Appuyer sur les genoux pour tendre les muscles des bras, |
| | Rotation des épaules pour détendre les muscles et activer la circulation, |
| | Pencher la tête à gauche et à droite avec la tête penchée. |
| Elevé | Contraction des muscles inférieurs, |
| | Contraction du périnée, |
| | Tirer la tête vers le haut pour étirer les muscles et libérer la tension. |
| Dangereux | Aucun exercice. |

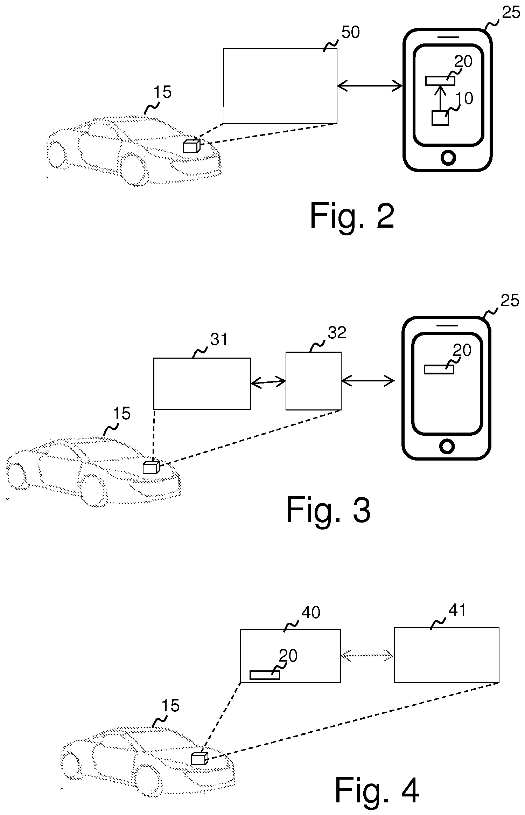

La figure 2 montre un premier exemple de réalisation du dispositif d'aide selon l'invention. Dans cet exemple, le dispositif 20 est intégré à un terminal mobile 25. Le dispositif utilise la fonction GPS de l'ordiphone. Avec les données du GPS, la vitesse et la position peuvent être déterminées.

De façon optionnelle, le terminal mobile 25, constitué sur la figure 2 par un Smartphone, est ici relié par une liaison haut débit de type filaire (USB) ou sans fil (Wifi) à un calculateur 50 du véhicule. Le calculateur 50 commande par exemple l'affichage d'un écran tactile intégré en partie centrale de la planche de bord du véhicule. Le calculateur 50 est doté d'une solution de duplication ou mirroring en anglais (par exemple : Apple CarPlay^{®}, Google Android Auto^{®} ou bien encore Mirrorlink^{®}) permettant pendant la conduite de reproduire en temps réel sur l'écran d'affichage tactile, et avec une interface visuelle adaptée, l'affichage généré par le terminal mobile 25.

Cette configuration permet ainsi au conducteur de visualiser les exercices déterminé l'application sur le terminal mobile 25, sur l'écran tactile 50 du véhicule, et de commander directement via cet écran tactile ladite application. Il est préférable que les vidéos des mouvements à réaliser ne sont que visibles au conducteur à l'arrêt et quand la voiture est en mouvement, il y une voix « coach » qui décrit les mouvements à faire et le bon manier de les faires. Une voix a le double avantage d'être un stress positif.

La figure 3 montre un deuxième exemple de réalisation du dispositif d'aide selon l'invention. Dans cet exemple, le terminal mobile 25 échange des données directement avec le calculateur 31 du véhicule au travers d'une interface de programmation 32 ou API (pour Application Programming Interface).

Ce mode de réalisation permet de fournir des données très précises au dispositif 20. L'estimation du niveau de risque s'en trouve améliorée. Ce qui permet une meilleure sécurité du conducteur.

La figure 4 montre un troisième exemple de réalisation du dispositif d'aide selon l'invention. Dans cet exemple, le dispositif d'aide est intégré à un calculateur 40 du véhicule. Les données du véhicule sont alors directement disponibles pour le dispositif d'aide.

Ce mode de réalisation permet d'éviter l'utilisation d'un terminal mobile. L'interface utilisateur est par exemple un écran 41 embarqué dans le véhicule 15. Egalement, le sports programme peux être projeté sur plusieurs écrans dans la voiture pour que tout le monde puisse partager la séance ensemble.

De façon avantageuse, dans le cas où le véhicule 15 comporte au moins un mode de conduite autonome, le dispositif d'assistance 20 comporte en outre des moyens de détermination du mode de conduite activé dans de véhicule 15.

Le mode de conduite activé est alors pris en compte pour la détermination d'un niveau de risque et/ou la sélection d'au moins un exercice physique.

Par exemple, si le mode de conduite activé est mode de conduite entièrement autonome, le niveau de risque déterminé est par exemple faible quelles que soient si les valeurs de vitesse et/ou d'accélération / décélération et/ou de changement de direction.

Si le mode de conduite activé est par exemple un mode de conduite prenant en charge le déplacement latéral du véhicule et ne nécessitant pas le les mains du conducteur sur le volant, alors les exercices proposés par les moyens de détermination 23 sont adaptés en prenant en compte ce paramètre. Des mouvements des bras peuvent être proposés au conducteur.

De façon avantageuse, le dispositif selon l'invention comporte en outre des moyens d'acquisition de paramètres liés au conducteur tels que sont identités (de façon à lui proposer des exercices personnalisés), et le cas échéant son activité (par exemple, conducteur ou passager du véhicule, en pause ou en audio conférence).

Ces paramètres sont par exemple communiqués par l'utilisateur sous la forme d'une auto-déclaration saisie via une interface du dispositif (par exemple l'écran tactile du terminal mobile sur lequel est exécutée l'application).

De façon alternative, certains paramètres sont déterminés au moins en partie de façon automatique par une acquisition de données. Par exemple, une donnée de position est utilisée pour déterminer si un utilisateur est chez lui, au bureau ou dans son véhicule.

## Revendications

1. Dispositif d'assistance (20) d'un conducteur d'un véhicule (15), pour effectuer des exercices physiques, comportant
- des moyens (21) d'acquisition de données représentatives d'un contexte de conduite,
- des moyens (22) de détermination d'un niveau de risque à partir des données le dispositif étant **caractérisé en ce qu'**il comporte :
- des moyens (23) de sélection d'au moins un exercice physique compatible avec le niveau de risque,
- des moyens (24) d'émission d'un signal indiquant au conducteur le au moins un exercice sélectionné.

2. Dispositif d'assistance selon la revendication 1, **caractérisé en ce que** les données représentatives d'un contexte de conduite comportent au moins une donnée choisie parmi, une vitesse du véhicule (15), une accélération et/ou une décélération du véhicule (15), un changement de direction du véhicule (15).

3. Dispositif d'assistance selon l'une des revendications précédentes, **caractérisé en ce qu'**il comporte en outre une mémoire (26) dans laquelle est stocké un ensemble de relations entre des niveaux de risques, d'une part, et des exercices physiques compatibles avec lesdits niveaux de risques, d'autre part.

4. Dispositif d'assistance selon l'une des revendications précédentes, **caractérisé en ce que**, le véhicule comportant au moins un mode de conduite autonome, le dispositif d'assistance comporte en outre des moyens de détermination du mode de conduite activé dans le véhicule, ledit mode de conduite activé étant pris en compte pour la détermination d'un niveau de risque et/ou la sélection d'au moins un exercice physique.

5. Dispositif d'assistance selon l'une des revendications précédentes, **caractérisé en ce qu'**il comporte en outre des moyens d'acquisition de paramètres liés au conducteur.

6. Dispositif d'assistance selon l'une des revendications précédentes, **caractérisé en ce que** les données représentatives d'un contexte de conduite proviennent de capteurs du véhicule.

7. Dispositif d'assistance selon l'une des revendications précédentes, **caractérisé en ce qu'**il comprend un module logiciel exécuté sur un calculateur embarqué du véhicule.

8. Dispositif d'assistance selon l'une des revendications 1 à 6, **caractérisé en ce qu'**il comprend un module logiciel exécuté sur un terminal mobile.

9. Véhicule **caractérisé en ce qu'**il comporte un dispositif d'assistance selon l'une des revendications précédentes.

## Patentansprüche

1. Vorrichtung zur Unterstützung (20) eines Fahrers eines Fahrzeugs (15), um körperliche Übungen durchzuführen, mit:
- Mittel (21) zur Erfassung von Daten, die für einen Fahrkontext repräsentativ sind,
- Mittel (22) zur Bestimmung eines Risikoniveaus anhand der Daten. wobei die Vorrichtung **dadurch gekennzeichnet ist, dass** sie umfasst:
- Mittel (23) zur Auswahl von mindestens einer körperlichen Übung, die mit dem Risikoniveau vereinbar ist,
- Mittel (24) zum Senden eines Signals, das dem Fahrer die mindestens eine ausgewählte Übung anzeigt.

2. Unterstützungsvorrichtung nach Anspruch 1, **dadurch gekennzeichnet, dass** die für einen Fahrkontext repräsentativen Daten mindestens ein Datum umfassen, das ausgewählt ist aus, einer Geschwindigkeit des Fahrzeugs (15), einer Beschleunigung und/oder einer Verzögerung des Fahrzeugs (15), einer Richtungsänderung des Fahrzeugs (15).

3. Unterstützungsvorrichtung nach einem der vorhergehenden Ansprüche, **dadurch gekennzeichnet, dass** sie außerdem einen Speicher (26) umfasst, in dem eine Reihe von Beziehungen zwischen Risikoniveaus einerseits und mit den Risikoniveaus vereinbaren körperlichen Übungen andererseits gespeichert ist.

4. Hilfsvorrichtung nach einem der vorhergehenden Ansprüche, **dadurch gekennzeichnet, dass**, da das Fahrzeug mindestens einen autonomen Fahrmodus umfasst, die Hilfsvorrichtung außerdem Mittel zur Bestimmung des im Fahrzeug aktivierten Fahrmodus umfasst, wobei der aktivierte Fahrmodus bei der Bestimmung eines Risikoniveaus und/oder der Auswahl mindestens einer körperlichen Übung berücksichtigt wird.

5. Unterstützungsvorrichtung nach einem der vorhergehenden Ansprüche, **dadurch gekennzeichnet, dass** sie außerdem Mittel zur Erfassung von fahrerbezogenen Parametern umfasst.

6. Unterstützungsvorrichtung nach einem der vorhergehenden Ansprüche, **dadurch gekennzeichnet, dass** die für einen Fahrkontext repräsentativen Daten von Sensoren des Fahrzeugs stammen.

7. Unterstützungsvorrichtung nach einem der vorhergehenden Ansprüche, **dadurch gekennzeichnet, dass** sie ein Softwaremodul umfasst, das auf einem fahrzeuginternen Rechner des Fahrzeugs ausgeführt wird.

8. Unterstützungsvorrichtung nach einem der Ansprüche 1 bis 6, **dadurch gekennzeichnet, dass** sie ein Softwaremodul umfasst, das auf einem mobilen Endgerät ausgeführt wird.

9. Fahrzeug, **dadurch gekennzeichnet, dass** es eine Assistenzvorrichtung nach einem der vorhergehenden Ansprüche enthält.

## Claims

1. Device (20) for assisting a driver of a vehicle (15) to perform physical exercises, comprising :
- means (21) for acquiring data representative of a driving context
- means (22) for determining a risk level from the data
the device being **characterised in that** it comprises:
- means (23) for selecting at least one physical exercise compatible with the risk level
- means (24) for emitting a signal indicating to the driver the at least one exercise selected.

2. Assistance device according to claim 1, **characterised in that** the data representing a driving context comprises at least one data item chosen from among, a speed of the vehicle (15), an acceleration and/or deceleration of the vehicle (15), a change of direction of the vehicle (15).

3. An assistance device according to one of the preceding claims, **characterised in that** it further comprises a memory (26) in which is stored a set of relationships between risk levels, on the one hand, and physical exercises compatible with said risk levels, on the other hand.

4. Assistance device according to one of the preceding claims, **characterised in that**, the vehicle comprising at least one autonomous driving mode, the assistance device further comprises means for determining the driving mode activated in the vehicle, said activated driving mode being taken into account for the determination of a risk level and/or the selection of at least one physical exercise.

5. Assistance device according to one of the preceding claims, **characterised in that** it further comprises means for acquiring parameters related to the driver.

6. Assistance device according to one of the preceding claims, **characterised in that** the data representative of a driving context comes from sensors of the vehicle.

7. Assistance device according to one of the preceding claims, **characterised in that** it comprises a software module executed on an on-board computer of the vehicle.

8. An assistance device according to any of the claims 1 to 6, **characterised in that** it comprises a software module executed on a mobile terminal.

9. Vehicle **characterised in that** it comprises an assistance device according to one of the preceding claims.
